# EUROPÄISCHE PATENTSCHRIFT

(11) **EP 3 084 900 B1**
(45) Veröffentlichungstag und Bekanntmachung des Hinweises auf die Patenterteilung: **14.08.2019**
(21) Anmeldenummer: 14833120.0
(22) Anmeldetag: 19.12.2014
(51) Int. Cl.: B29C 45/00, H01R 13/405, H01R 43/24

(54) **STECKVERBINDER, SOWIE WERKZEUG UND VERFAHREN ZU SEINER HERSTELLUNG**
PLUG, AND TOOL AND METHOD FOR THE PRODUCTION THEREOF
CONNECTEUR ENFICHABLE, MOULE ET PROCÉDÉ POUR SA PRODUCTION

(30) Priorität: 20.12.2013 DE 102013021752
(43) Veröffentlichungstag der Anmeldung: 26.10.2016
(73) Patentinhaber: ERNI Production GmbH & Co. KG, 73099 Adelberg (DE)
(72) Erfinder: LAPPÖHN, Jürgen, 73108 Gammelshausen (DE)
(74) Vertreter: Jakelski & Althoff Patentanwälte PartG mbB
(86) Internationale Anmeldenummer: PCT/DE2014/100460
(87) Internationale Veröffentlichungsnummer: WO 2015/090287

(56) Entgegenhaltungen:
- DE-A1- 3 621 379
- DE-A1- 19 832 807
- JP-A- H07 227 888
- US-A- 4 556 190
- US-A- 5 692 928
- US-A- 5 824 257
- US-A- 5 833 913
- US-A1- 2011 306 246
- US-B1- 6 312 294

## Beschreibung

Die vorliegende Erfindung betrifft ein Werkzeug zur Herstellung des Steckverbinders mittels Spritzgießens und ein Verfahren zur Herstellung des Steckverbinders mittels Spritzgießens, welches insbesondere unter Verwendung des erfindungsgemäßen Werkzeugs durchgeführt werden kann.

### Stand der Technik

Herkömmliche Steckverbinder umfassen einen Isolationskörper, in dem mehrere elektrische Kontaktelemente befestigt sind. Als elektrische Kontaktelemente können Messerelemente oder Federelemente verwendet werden. Die Herstellung des Isolationskörpers erfolgt, indem ein geschmolzener Kunststoff, beispielsweise mittels Spritzgießens, in ein Werkzeug zur Herstellung des Isolationskörpers eingebracht wird. Als thermoplastische Kunststoffe finden beispielsweise flüssigkristalline Polymere (LCP) Verwendung. Um in dem Isolationskörper Öffnungen zu definieren, in welche die elektrischen Kontaktelemente eingebracht werden können, weist das Werkzeug auf einer Basisplatte sogenannte Kerne auf. Diese Kerne haben einen üblicherweise rechteckigen Querschnitt und entsprechen in Form und Abmessungen jenem Teil der elektrischen Kontaktelemente, welcher später in den Isolationskörper eingebracht werden soll, um den Steckverbinder herzustellen. Der geschmolzene Kunststoff strömt bei der Herstellung des Isolationskörpers zunächst auf die Kerne zu. Jeder Kern teilt den Strom der Kunststoffschmelze in zwei Teilströme auf, die hinter dem Kern wieder zusammenfließen. Dort wo die beiden Teilströme aufeinandertreffen, kann sich beim Erkalten und Verfestigen der Kunststoffschmelze ein Bindenahtriss im Isolationskörper bilden. Dies hat zur Folge, dass der fertige Steckverbinder bei späterer mechanischer Belastung an dem Bindenahtriss brechen kann.

US 5 824 257 A offenbart ein Werkzeug zum Spritzgießen nach dem Oberbegriff des Anspruchs 1.

Es ist die Aufgabe der vorliegenden Erfindung, ein Werkzeug und ein Verfahren zur Herstellung eines elektrischen Steckverbinders bereitzustellen, welcher nicht die aus dem Stand der Technik bekannten Bindenahtrisse aufweist und somit über eine höhere mechanische Belastbarkeit verfügt als herkömmliche Steckverbinder.

### Offenbarung der Erfindung

Das erfindungsgemäße Werkzeug zur Herstellung des Steckverbinders mittels Spritzgießens nach Anspruch 1 weist einen Basisbereich und mehrere aus dem Basisbereich vorspringende Kerne auf. Unter Kernen werden dabei erfindungsgemäß fest mit dem Basisbereich verbundene Körper verstanden, die den Strom einer Polymerschmelze umlenken können und für diese undurchlässig sind. Mindestens ein Kern weist einen rechteckigen Querschnitt mit mehreren Kernstörkonturen auf. Der Begriff Kernstörkontur wird dabei ebenso wie der Begriff Öffnungsstörkontur im Zusammenhang mit dem erfindungsgemäßen Steckverbinder so verstanden, dass die Kernstörkontur den Querschnitt des Kerns über seine rechteckige Grundform hinaus erweitert.

Es ist bevorzugt, dass jede der Kernstörkonturen sich an einer Seite des Kerns befindet, die einem anderen Kern zugewandt ist. In einer Ausführungsform des erfindungsgemäßen Werkzeuges kann dieses mindestens einen weiteren Kern aufweisen, der eine Kernstörkontur aufweist, die keinem anderen Kern, sondern einem Rand des Basisbereiches des Werkzeugs zugewandt ist. In einer anderen Ausführungsform des erfindungsgemäßen Werkzeugs ist jede Kernstörkontur, die sich an einer Seite eines Kerns befindet, einem anderen Kern zugewandt, sodass keine Kernstörkontur einem Rand des Basisbereiches des Werkzeugs zugewandt ist. Kernstörkonturen die anderen Kernen zugewandt sind, sind dazu geeignet Friktionen einer Polymerschmelze zwischen den Kernen zu verursachen.

Besonders bevorzugt weist das Werkzeug an einem ersten Kern mindestens eine erste Kernstörkontur auf, die einem zweiten Kern zugewandt ist. An dem zweiten Kern weist es mindestens eine zweite Kernstörkontur auf, die einem ersten Kern zugewandt ist, sodass die erste Kernstörkontur und die zweite Kernstörkontur einander zugewandt sind. Hierdurch können besonders starke Friktionen einer Polymerschmelze erzeugt werden.

Ganz besonders bevorzugt verläuft jede Seite der ersten Kernstörkontur parallel zu einer Seite der zweiten Kernstörkontur. Hierdurch sind die beiden Kernstörkonturen zueinander punktsymmetrisch, was eine einfache Fertigung des Werkzeugs ermöglicht.

Die mehreren Kernstörkonturen, sind punktsymmetrisch an dem Kern angeordnet. Sie sind aber nicht spiegelsymmetrisch an dem Kern angeordnet. Unter spiegelsymmetrisch wird erfindungsgemäß verstanden, dass der Kern durch nur eine einzige Spiegelungsoperation entlang einer Spiegelebene in sich selbst überführbar ist, wobei diese Spiegelebene nicht orthogonal auf der Längsachse des Kerns steht.

Das erfindungsgemäße Werkzeug ist insbesondere dazu eingerichtet, eine Schmelze eines thermoplastischen Polymers aufzunehmen. Hierzu bestehen der Basisbereich und die Kerne insbesondere aus einem Material, welches einer Temperatur von mindestens 350°C ohne Erweichung oder thermische Schädigung standhalten kann.

Das erfindungsgemäße Spritzgießverfahren zur Herstellung eines Steckverbinders nach Anspruch 5 umfasst die folgenden Schritte:
- Bereitstellen eines Werkzeugs nach einem der Ansprüche 1 bis 4,
- Einbringen einer geschmolzenen Polymermasse in das Werkzeug, wobei die Fließrichtung der Polymermasse so gelenkt wird, dass keine Kunststoffströme entlang einer Linie aufeinandertreffen, welche die Mittelpunkte zweier Kerne miteinander verbindet,
- Verfestigenlassen der geschmolzenen Kunststoffmasse,
- Entfernen des Werkzeugs, um einen elektrischen Isolationskörper zu erhalten, der aus der Kunststoffmasse besteht und der durchgehende Öffnungen aufweist, und
- Einbringen jeweils eines elektrischen Kontaktelements in jede der durchgehenden Öffnungen.

Die Polymermasse enthält insbesondere faserförmige Füllstoffe. Um eine gute elektrische Isolationswirkung des Isolationskörpers zu erreichen sind elektrisch nicht leitende faserförmige Füllstoffe, wie beispielsweise Glasfasern, bevorzugt.

Indem verhindert wird, dass Kunststoffströme entlang der Linie aufeinandertreffen, welche die Mittelpunkte zweier Kerne miteinander verbindet, kann die Bildung von Bindenahtrissen vermieden werden.

Das Werkzeug ist ein erfindungsgemäßes Werkzeug, wobei die Fließrichtung der Polymermasse mittels der mindestens einen Kernstörkontur gelenkt wird. Auf diese Weise ermöglicht die erfindungsgemäße Form der Kerne des erfindungsgemäßen Werkzeugs die Durchführung des erfindungsgemäßen Verfahrens. Hierdurch werden allerdings in dem Isolationskörper durchgehende Öffnungen erzeugt, welche über den rechteckigen Querschnitt hinaus, der zur Aufnahme der elektrischen Kontaktelemente notwendig ist, eine Erweiterung des Querschnitts aufgrund der Kernstörkonturen der Kerne aufweisen. Der rechteckige Grundquerschnitt der durchgehenden Öffnungen gewährleistet allerdings eine hinreichend sichere Befestigung der elektrischen Kontaktelemente in den durchgehenden Öffnungen.

Es ist besonders bevorzugt, dass die Kunststoffmasse aus einer Richtung, in die das Werkzeug eingebracht wird, in welche mindestens eine Kernstörkontur des Werkzeugs weist. Auf diese Weise kann die Kernstörkontur eine Umlenkung des Polymerstroms bewirken.

### Kurze Beschreibung der Zeichnungen

Ausführungsbeispiele der Erfindung sind in den Zeichnungen dargestellt und werden in der folgenden Beschreibung näher erläutert.
Fig. 1 zeigt eine isometrische Darstellung eines Werkzeugs zur Herstellung eines Steckverbinders gemäß dem Stand der Technik.
Fig. 2 zeigt eine Aufsicht auf das Werkzeug gemäß Fig. 1 bei der Herstellung eines elektrischen Isolationskörpers.
Fig. 3 zeigt eine Aufsicht auf einen elektrischen Isolationskörper eines Steckverbinders gemäß dem Stand der Technik.
Fig. 4 zeigt ein elektrisches Kontaktelement gemäß dem Stand der Technik.
Fig. 5 zeigt eine isometrische Darstellung eines Teils eines Steckverbinders gemäß dem Stand der Technik.
Fig. 6 zeigt eine Aufsicht auf ein anderes Werkzeug gemäß dem Stand der Technik bei der Herstellung eines elektrischen Isolationskörpers.
Fig. 7 zeigt eine Aufsicht auf einen anderen elektrischen Isolationskörper eines Steckverbinders gemäß dem Stand der Technik.
Fig. 8 zeigt eine isometrische Darstellung eines Teils eines anderen Steckverbinders gemäß dem Stand der Technik.
Fig. 9 zeigt eine isometrische Darstellung eines Werkzeugs zur Herstellung eines Steckverbinders gemäß einem ersten Ausführungsbeispiel der Erfindung.
Fig. 10 zeigt eine Aufsicht auf das Werkzeug gemäß Fig. 6 bei der Herstellung eines elektrischen Isolationskörpers.
Fig. 11 zeigt eine Aufsicht auf den elektrischen Isolationskörper eines Steckverbinders, der gemäß dem ersten Ausführungsbeispiel der Erfindung hergestellt werden kann.
Fig. 12 zeigt eine isometrische Darstellung eines Teils eines Steckverbinders, der gemäß dem ersten Ausführungsbeispiel der Erfindung hergestellt werden kann.
Fig. 13 zeigt eine isometrische Darstellung eines Werkzeugs zur Herstellung eines Steckverbinders gemäß einem zweiten Ausführungsbeispiel der Erfindung.
Fig. 14 zeigt eine Aufsicht auf das Werkzeug gemäß Fig. 10 bei der Herstellung eines elektrischen Isolationskörpers.
Fig. 15 zeigt eine Aufsicht auf einen elektrischen Isolationskörper eines Steckverbinders, der gemäß dem zweiten Ausführungsbeispiel der Erfindung hergestellt werden kann.
Fig. 16 zeigt eine isometrische Ansicht eines Teils eines Steckverbinders, der gemäß dem zweiten Ausführungsbeispiel der Erfindung hergestellt werden kann.
Fig. 17 zeigt eine Aufsicht auf einen elektrischen Isolationskörper eines Steckverbinders, der gemäß einem dritten Ausführungsbeispiel der Erfindung hergestellt werden kann.
Fig. 18 zeigt eine isometrische Ansicht eines Steckverbinders, der gemäß dem dritten Ausführungsbeispiel der Erfindung hergestellt werden kann.

### Ausführungsbeispiele der Erfindung

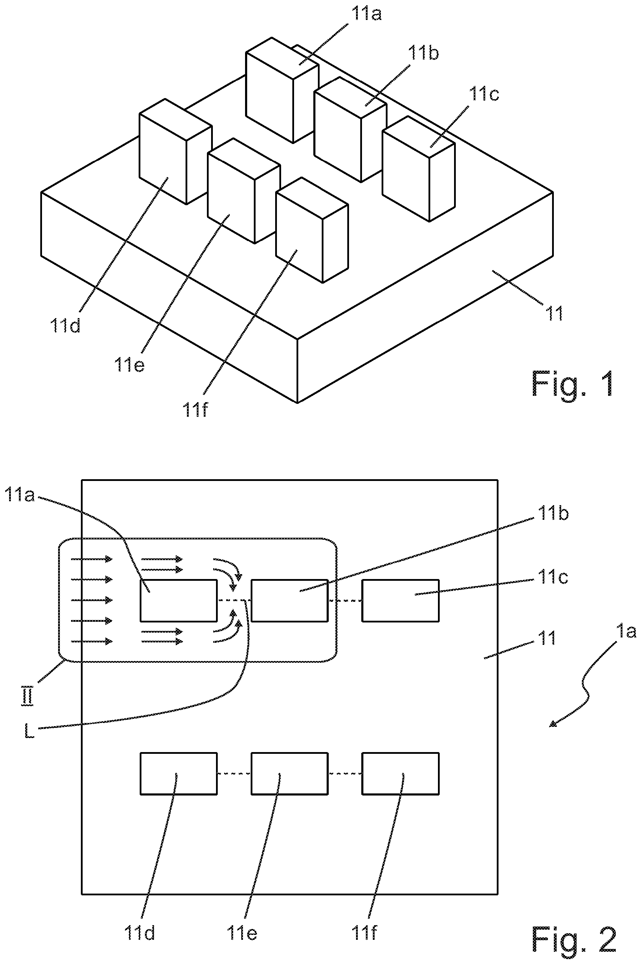

Ein erstes herkömmliches Werkzeug 1a zur Herstellung eines elektrischen Steckverbinders, wie es in den Fig. 1 und 2 dargestellt ist, weist einen rechteckigen Basisbereich 11 auf, auf dem sechs Kerne 11a, 11b, 11c, 11d, 11e, 11f in zwei parallelen Reihen angeordnet sind, wobei die erste Reihe die ersten drei Kerne 11a, 11b, 11c und die zweite Reihe die weiteren drei Kerne 11d, 11e, 11f aufweist. Der Basisbereich 11 und die Kerne 11a, 11b, 11c, 11d, 11e, 11f sind einstückig aus einem Metall ausgebildet. Die Kerne 11a, 11b, 11c, 11d, 11e, 11f haben jeweils einen rechteckigen Querschnitt, wobei ihre Länge entlang einer der beiden Reihen größer ist, als ihre Breite quer zu einer der beiden Reihen.

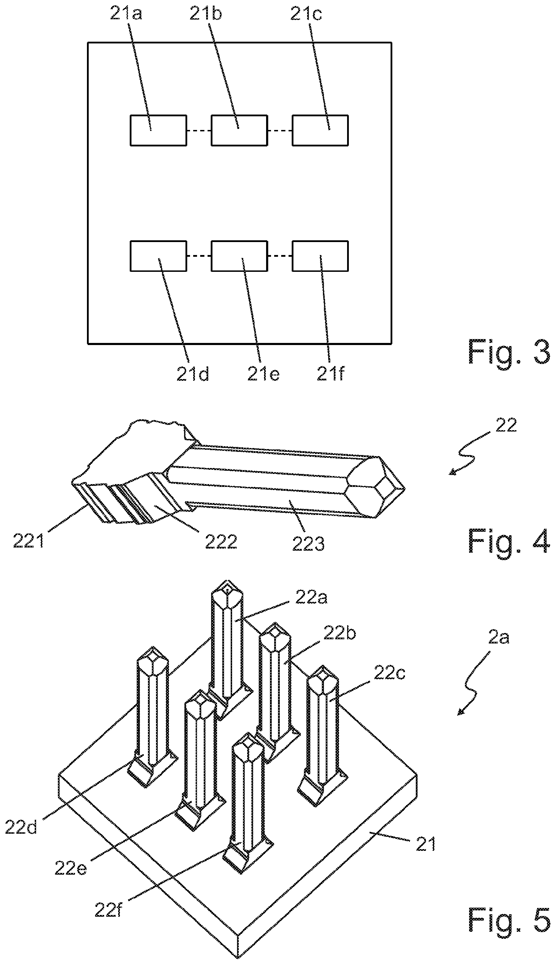

In dieses Werkzeug 1a wird eine thermoplastische LCP-Polymerschmelze mittels Spritzgießen typischerweise bei einer Temperatur von 350°C und einem Druck von 100 MPa eingebracht. In dem Bereich II in Fig. 2 ist mittels Pfeilen dargestellt, wie der in das Werkzeug 1a einströmende Polymerstrom von einem Kern 11a in zwei Teilströme aufgeteilt wird, die zwischen diesem Kern 11a und dem in Strömungsrichtung dahinter liegenden Kern 11b wieder zusammenströmen und sich auf einer Linie L treffen, welche die Mittelpunkte dieser beiden Kerne 11a, 11b miteinander verbindet. An der Oberfläche der Polymerschmelze und damit auch an der Schmelzefront bildet sich durch Abkühlung eine "Haut" von teilweise erstarrter Schmelze. Wenn die Schmelzefronten mit ihren Häuten zusammenströmen bildet sich deshalb beim Erkalten der Polymerschmelze bildet entlang der Linie L eine Binderissnaht. Entsprechende Binderissnähte bilden sich ebenfalls zwischen allen weiteren Paaren von Kernen, die in Strömungsrichtung der Polymerschmelze aufeinanderfolgen, d. h. auch zwischen den Kernen 11b und 11c, den Kernen 11d und 11e und den Kernen 11e und 11f. Nach Erkalten und Verfestigen der Polymerschmelze kann ein in Fig. 3 dargestellter Isolationskörper 21 dem Werkzeug 1 entnommen werden. Er weist an den Positionen, von welchen die Kerne 11a, 11b, 11c, 11d, 11e, 11f die Polymerschmelze ferngehalten haben, durchgehende Öffnungen 21a, 21b, 21c, 21d, 21e, 21f auf. Der elektrische Isolationskörper 21 wird durch Binderissnähte geschwächt, welche sich zwischen den durchgehenden Öffnungen 21a und 21b, zwischen 21b und 21c, zwischen 21d und 21e und zwischen 21e und 21f befinden.

Zur Herstellung eines elektrischen Steckverbinders werden elektrische Kontaktelemente 22 in die durchgehenden Öffnungen 21a, 21b, 21c, 21c, 21e, 21f eingebracht. Diese elektrischen Kontaktelemente 22 können als Messerelemente ausgeführt sein, wie sie in Fig. 4 dargestellt sind. Ein solches Messerelement besteht aus einem Abschnitt 221 mit rechteckigem Querschnitt, einem Abschnitt 222, in welchem eine Querschnittsverjüngung stattfindet und einem Messerabschnitt 223. Sechs derartige Kontaktelemente 22a, 22b, 22c, 22d, 22e, 22f werden so in dem elektrischen Isolationskörper 21 positioniert, dass jeweils der Abschnitt 221 mit rechteckigem Querschnitt eine der durchgehenden Öffnungen 21a, 21b, 21c, 21d, 21e, 21f ausfüllt. Dazu entspricht der Querschnitt dieses Abschnitts 221 dem Querschnitt der durchgehenden Öffnungen 21a, 21b, 21c, 21d, 21e, 21f. Der so erhaltene herkömmliche Steckverbinder 2a ist in Fig. 5 teilweise dargestellt.

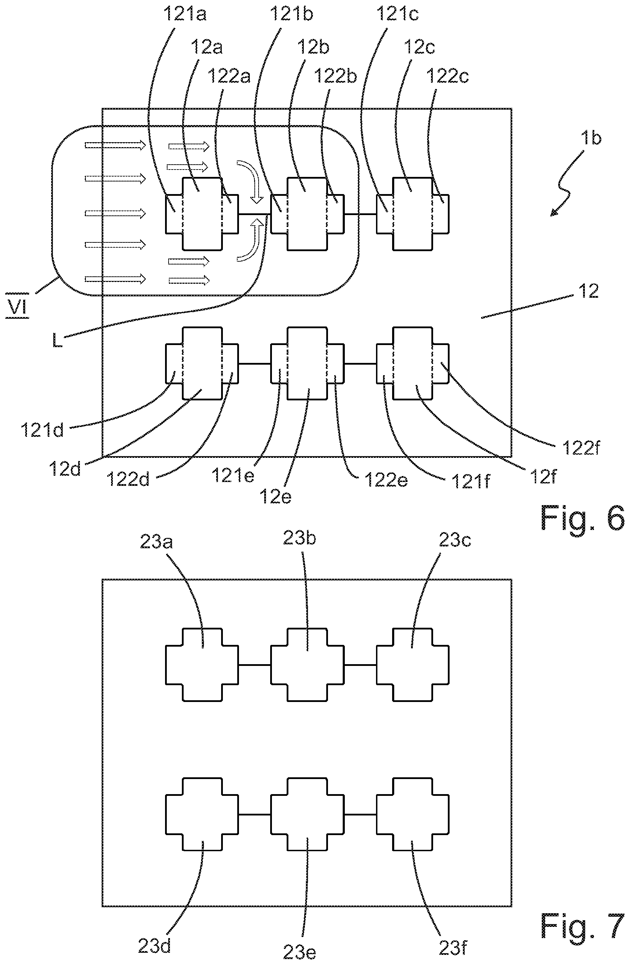

Ein zweites herkömmliches Werkzeug 1b ist in Fig. 6 dargestellt. Dieses weist einen Basisbereich 12 mit sechs Kernen 12a, 12b, 12c, 12d, 12e, 12f auf, welche in derselben Weise angeordnet sind wie die Kerne 11a, 11b, 11c, 11d, 11e, 11f des ersten herkömmlichen Werkzeugs 1a. Entlang der beiden Reihen der Kerne 12a, 12b, 12c, 12d, 12e, 12f weist jeder der Kerne 12a, 12b, 12c, 12d, 12e, 12f auf seiner linken Seite und auf seiner rechten Seite eine rechteckige Kernstörkontur 121a, 122a, 121b, 122b, 121c, 122c, 121d, 122d, 121e, 122e, 121f, 122f auf. Die Kerne weisen dadurch jeweils einen kreuzförmigen Querschnitt auf, der sowohl zu einer waagerechten Spiegelebene, zu einer senkrechten Spiegelebene als auch zu einer um 45° zu diesen beiden Spiegelebenen gedrehten diagonalen Spiegelebene jeweils spiegelsymmetrisch ist.

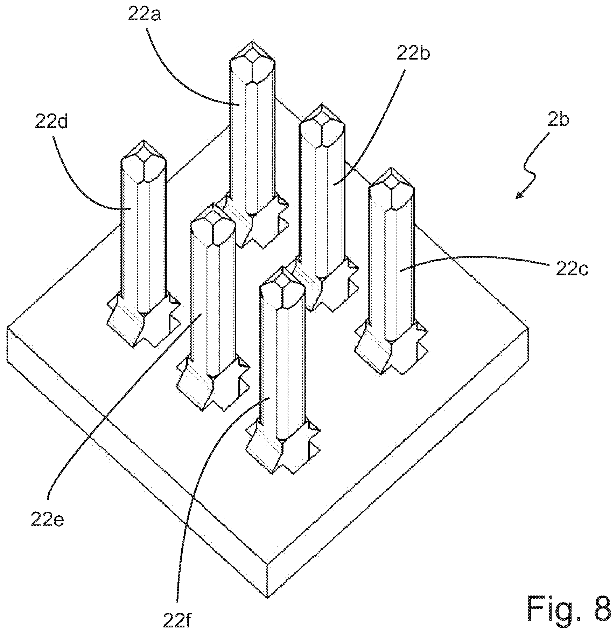

In dieses Werkzeug 1b wird eine thermoplastische LCP-Polymerschmelze unter denselben Bedingungen wie in das erste herkömmliche Werkzeug 1a eingebracht eingebracht. In dem Bereich VI in Fig. 6 ist mittels Pfeilen dargestellt, wie der in das Werkzeug 1b einströmende Polymerstrom von einem Kern 12a in zwei Teilströme aufgeteilt wird, die zwischen diesem Kern 12a und dem in Strömungsrichtung dahinter liegenden Kern 12b wieder zusammenströmen und sich auf einer Linie L treffen, welche die Mittelpunkte dieser beiden Kerne 12a, 12b miteinander verbindet. Beim Erkalten der Polymerschmelze bildet sich entlang dieser Linie L eine Binderissnaht. Entsprechende Binderissnähte bilden sich ebenfalls zwischen allen weiteren Paaren von Kernen, die in Strömungsrichtung der Polymerschmelze aufeinanderfolgen, d. h. auch zwischen den Kernen 12b und 12c, den Kernen 12d und 12e und den Kernen 12e und 12f. Nach Erkalten und Verfestigen der Polymerschmelze kann ein in Fig. 7 dargestellter Isolationskörper dem Werkzeug 1b entnommen werden. Er weist an den Positionen, von welchen die Kerne 12a, 12b, 12c, 12d, 12e, 12f die Polymerschmelze ferngehalten haben, durchgehende Öffnungen 23a, 23b, 23c, 23d, 23e, 23f auf. Der elektrische Isolationskörper wird durch Binderissnähte geschwächt, welche sich zwischen den durchgehenden Öffnungen 23a und 23b, zwischen 23b und 23c, zwischen 23d und 23e und zwischen 23e und 23f befinden. Die spiegelsymmetrischen Kernstörkonturen 121a, 122a, 121b, 122b, 121c, 122c, 121d, 122d, 121e, 122e, 121f, 122f haben gegenüber dem Isolationskörper der mittels des ersten herkömmlichen Werkzeugs 1a hergestellt wurde, keinen Einfluss auf die Ausbildung der Binderissnähte genommen. Durch Einbringen der elektrischen Kontaktelemente 22a, 22b, 22c, 22d, 22e, 22f, welche in ihrer Gestaltung herkömmlichen elektrischen Kontaktelementen 22 entsprechen, wird der in Fig. 8 teilweise dargestellte elektrische Steckverbinder 2b erhalten. Hierbei ist der Abschnitt 221 mit rechteckigem Querschnitt jedes elektrischen Kontaktelements 22a, 22b, 22c, 22d, 22e, 22f jeweils in dem rechteckigen Bereich der durchgehenden Öffnungen 12a, 12b, 12c, 12c, 12d, 12e, 12f befestigt, während die Öffnungsstörkonturen unausgefüllt bleiben.

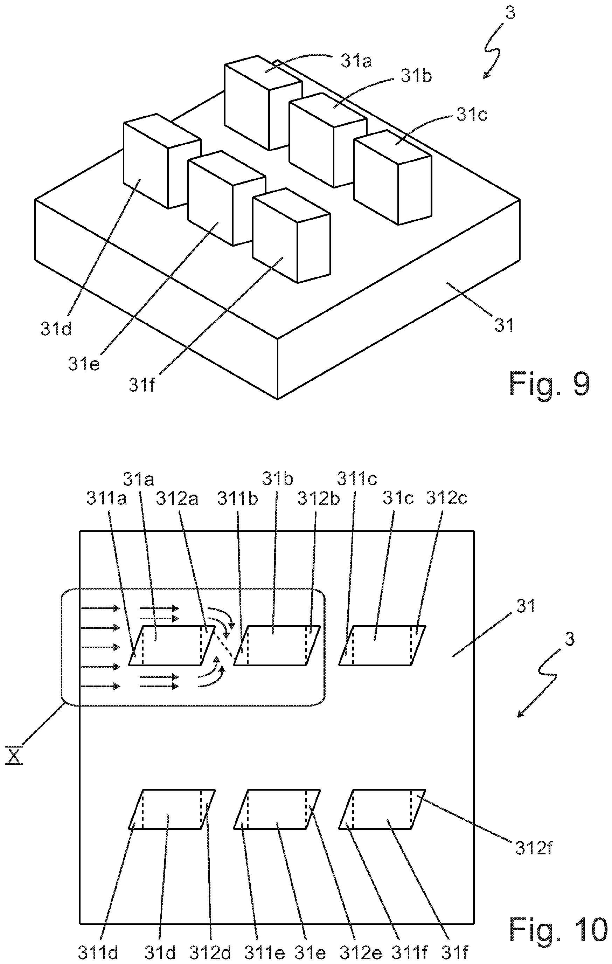

Ein Werkzeug 3 gemäß einem ersten Ausführungsbeispiel der Erfindung ist in den Fig. 9 und 10 dargestellt. Dieses weist einen Basisbereich 31 mit sechs Kernen 31a, 31b, 31c, 31d, 31e, 31f auf, welche in derselben Weise angeordnet sind wie die Kerne 11a, 11b, 11c, 11d, 11e, 11 f des herkömmlichen Werkzeugs 1. Entlang der beiden Reihen der Kerne 31a, 31b, 31c, 31d, 31e, 31f weist jeder der Kerne 31a, 31b, 31c, 31d, 31e, 31f auf seiner in der Aufsicht gemäß Fig. 10 linken Seite über seine gesamte Breite eine dreieckige Kernstörkontur 311a, 311b, 311c, 311d, 311e, 311f auf. Auf der gegenüberliegenden rechten Seite befindet sich jeweils eine dazu punktsymmetrische, aber nicht spiegelsymmetrische weitere dreieckige Kernstörkontur 312a, 312b, 312c, 312d, 312e, 312f. Die Kerne 31a, 31b, 31c, 31d, 31e, 31f weisen dadurch jeweils einen parallelogrammförmigen Querschnitt auf, wobei kein Winkel des Parallelogramms 90° beträgt.

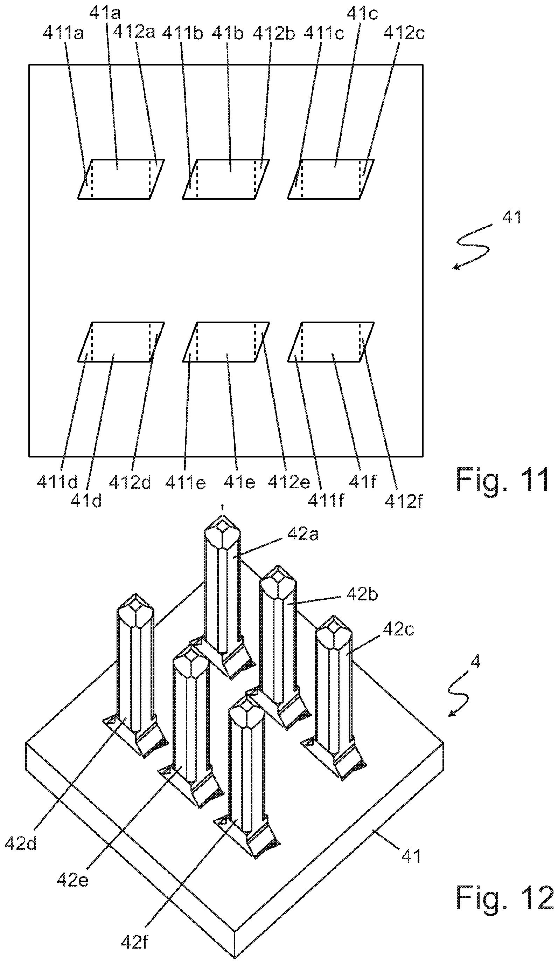

Wenn eine Polymerschmelze in herkömmlicher Weise in das Werkzeug 3 eingebracht wird, wird ihr Strom zunächst wie in dem Bereich X in Fig. 10 dargestellt ist, in bekannter Weise in Teilströme aufgeteilt. Wenn diese Teilströme zwischen zwei Kernen 31a, 31b entlang einer gestrichelt dargestellten Linie wieder zusammenströmen, kommt es allerdings durch die im Bereich der Zusammenströmung befindlichen Kernstörkonturen 312a, 311b der beiden Kerne 31a, 31b zu einer Friktion oder ähnlichem der Schmelzefronten. Dabei wird die an der Schmelzefront ausgebildete Haut bei der Friktion von in der Polymerschmelze enthaltenen faserförmigen Füllstoffen wie beispielsweise Glasfasern aufgerissen. Hierdurch können sich keine Bindenahtrisse ausbilden. Dem Werkzeug kann also ein Isolationskörper 41 entnommen werden, welcher nicht durch Bindenahtrisse mechanisch geschwächt ist. Wie in Fig. 11 dargestellt ist, weisen die durchgehenden Öffnungen 41a, 41b, 41c, 41d, 41e, 41f, welche die Kerne 31a, 31b, 31c, 31d, 31e, 31f in dem Isolationskörper 41 erzeugt haben, keinen rechteckigen, sondern vielmehr einen parallelogrammförmigen Querschnitt auf. Dieser setzt sich jeweils aus einem rechteckigen Grundquerschnitt und Öffnungsstörkonturen 411a, 412a, 411b, 412b, 411c, 412c, 411d, 412d, 411e, 412e, 411f, 412f zusammen, welche die Kernstörkonturen 311a, 312a, 311b, 312b, 311c, 312c, 311d, 312d, 311e, 312e, 311f, 312f des Werkzeugs 3 wiedergeben. Durch Einbringen von elektrischen Kontaktelementen 42a, 42b, 42c, 42d, 42e, 42f, welche in ihrer Gestaltung herkömmlichen elektrischen Kontaktelementen 22 entsprechen, wird der in Fig. 12 teilweise dargestellte elektrische Steckverbinder 4 erhalten. Hierbei ist der Abschnitt 221 mit rechteckigem Querschnitt jedes elektrischen Kontaktelements 42a, 42b, 42c, 42d, 42e, 42f jeweils in dem rechteckigen Bereich der durchgehenden Öffnungen 41a, 41b, 41c, 41d, 41e, 41f befestigt, während die Öffnungsstörkonturen 411a, 412a, 411b, 412b, 411c, 412c, 411d, 412d, 411e, 412e, 411f, 412f unausgefüllt bleiben. Dies hat jedoch für die Funktionalität des elektrischen Steckverbinders 4 keine negativen Folgen.

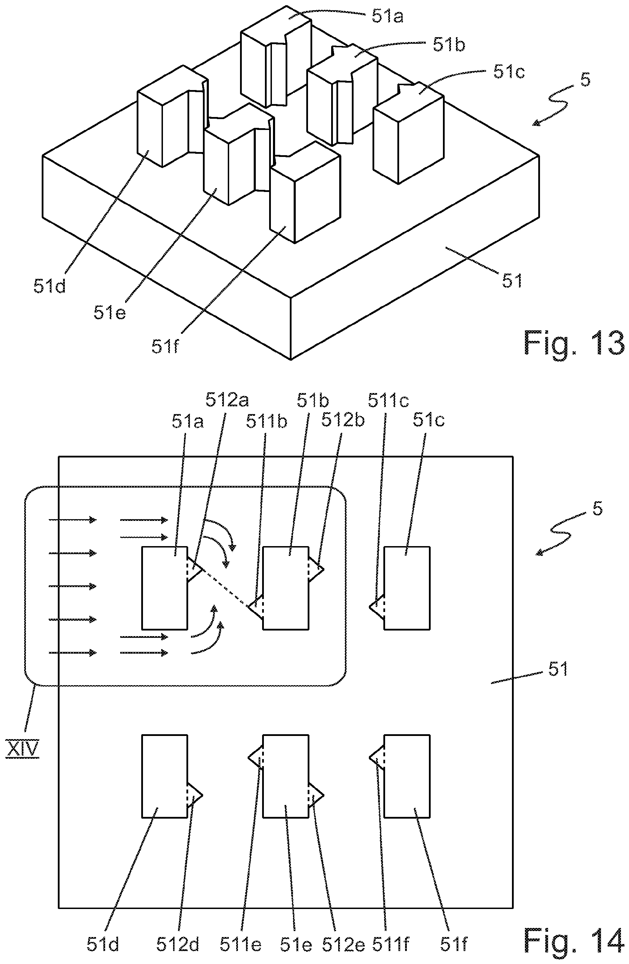

Ein Werkzeug 5 zur Herstellung eines elektrischen Steckverbinders gemäß einem zweiten Ausführungsbeispiel der Erfindung ist in Fig. 13 und 14 gezeigt. Ein rechteckiger Basisbereich 51 weist sechs in herkömmlicher Weise angeordnete Kerne 51a, 51b, 51c, 51d, 51e, 51f auf, wobei ihre Länge entlang einer der beiden Reihen kleiner ist, als ihre breite quer zu einer der beiden Reihen. Die Kerne 51a, 51b, 51c, 51d, 51e, 51f weisen Kernstörkonturen 512a, 511b, 512b, 511c, 512d, 511e, 512e, 511f auf, welche so angeordnet sind, dass sie ausschließlich anderen Kernen 51a, 51b, 51c, 51d, 51e, 51f innerhalb derselben Reihe, jedoch nicht einem Rand des Basisbereichs 51 zugewandt sind. Die Kernstörkonturen 512a, 511b, 512b, 511c, 512d, 511e, 512e, 511f sind jeweils von dreieckiger Form und haben eine geringere Breite als der Kern 51a, 51b, 51c, 51d, 51e, 51f an dem sie angeordnet sind. Innerhalb der ersten Reihe von Kernen 51a, 51b, 51c weist der erste Kern 51a eine Kernstörkontur 512a auf, welche dem zweiten Kern 51b zugewandt ist. Der dritte Kern 51c weist eine Kernstörkontur 511c auf, welche dem zweiten Kern 51b zugewandt ist. Der zweite Kern 51b weist eine erste Kernstörkontur 511b auf, welche dem ersten Kern 51a zugewandt ist und eine zweite Kernstörkontur 512e, welche dem dritten Kern 51c zugewandt ist. Die beiden Kernstörkonturen 511b, 512b des zweiten Kerns 51b sind zueinander punktsymmetrisch, aber nicht spiegelsymmetrisch angeordnet. Die jeweils einander zugewandten Paare von Kernstörkonturen 512a, 511b und 512b, 511c sind jeweils so angeordnet, dass jeweils eine Seite jeder Kernstörkontur eines der Paare 512a, 511b und 512b, 511c auf einer gemeinsamen Geraden mit einer Seite der anderen Kernstörkontur dieses Paares liegt. Die Kernstörkonturen 512d, 511e, 512e, 511f in der zweiten Reihe von Kernen 51d, 51e, 51f sind spiegelsymmetrisch zu den Kernstörkonturen 512a, 511b, 512b, 511c der Kerne 51a, 51b, 51c der ersten Reihe angeordnet.

Strömt eine geschmolzene Polymermasse in das Werkzeug 5 ein, so wird ihr Strom, wie im Bereich XIV in Fig. 14 gezeigt ist, zunächst in herkömmlicher Weise von einem Kern 51a in zwei Teilströme geteilt, die anschließend zwischen zwei Kernen 51a, 51b entlang einer gestrichelt dargestellten Linie wieder zusammenströmen. Die in diesem Zusammenströmungsbereich angeordneten Kernstörkonturen 512a, 511b der beiden Kerne 51a, 51b verursachen hierbei eine Friktion der Polymerströme, sodass sich auch in diesem Ausführungsbeispiel der Erfindung keine Bindenahtrisse ausbilden können.

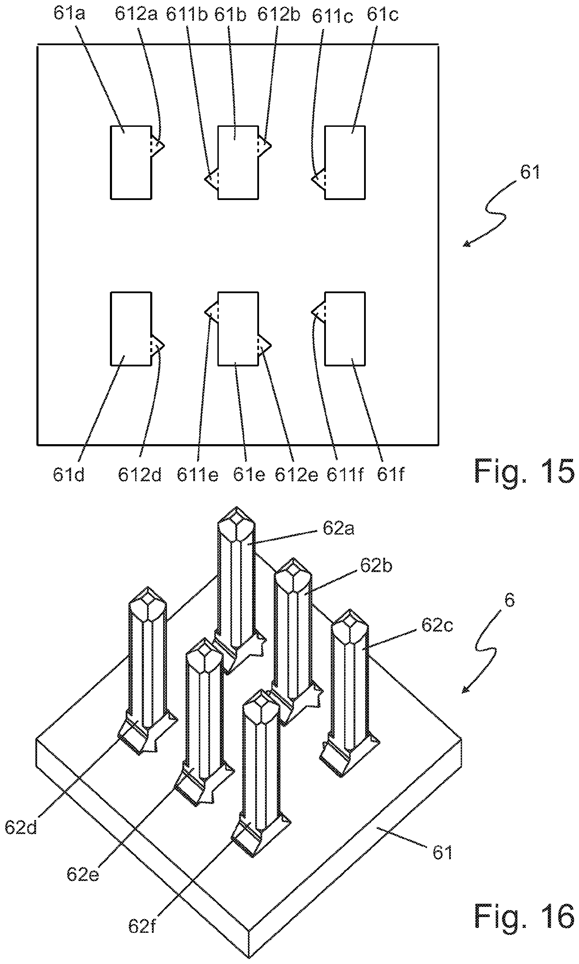

Dem Werkzeug 5 kann also ein Isolationskörper 61 entnommen werden, welcher frei von mechanischen Störungen ist. Wie in Fig. 15 dargestellt ist, weist dieser Isolationskörper 61 durchgehende Öffnungen 61a, 61b, 61c, 61d, 61e, 61f auf, welche, wie im ersten Ausführungsbeispiel der Erfindung, Öffnungsstörkonturen 612a, 611b, 612b, 611c, 612d, 611e, 612e, 611f aufweisen, welche die Form der Kernstörkonturen 512a, 511b, 512b, 511c, 512d, 511e, 512e, 511f der Kerne 51a, 51b, 51c, 51d, 51e, 51f wiedergeben. Um einen in Fig. 16 teilweise dargestellten elektrischen Steckverbinder 6 zu erhalten, werden in die durchgehenden Öffnungen 61a, 61b, 61c, 61d, 61e, 61f elektrische Kontaktelemente 62a, 62b, 62c, 62d, 62e, 62f derart eingeführt, dass ihr Abschnitt 221 mit rechteckigem Querschnitt den rechteckigen Bereich der durchgehenden Öffnungen 61a, 61b, 61c, 61d, 61e, 61f ausfüllt. Die Öffnungsstörkonturen 612a, 611b, 612b, 611c, 612d, 611e, 612e, 611f werden nicht ausgefüllt und bleiben wie im ersten Ausführungsbeispiel des erfindungsgemäßen Steckverbinders offen, ohne hierdurch die mechanische Stabilität des elektrischen Steckverbinders 6 zu schwächen.

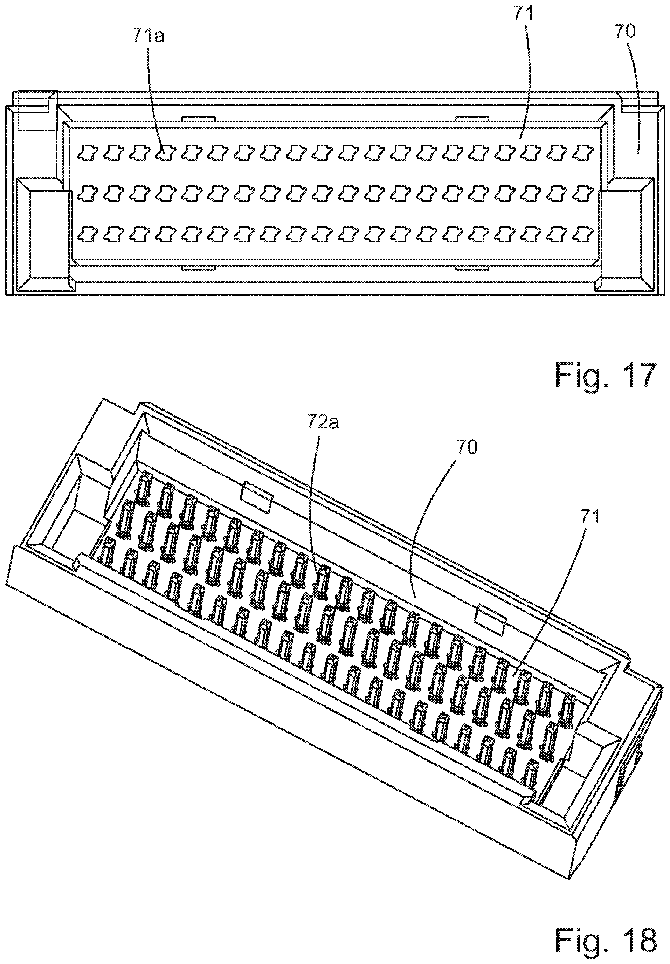

In einem dritten Ausführungsbeispiel der Erfindung wird ein in Figur 17 dargestellter Isolationskörper 71 hergestellt, dessen Öffnungsstörkonturen einen Querschnitt aufweisen, deren Dreieckform sich geringfügig von der Dreieckform der Öffnungsstörkonturen des zweiten Ausführungsbeispiels unterscheidet. Der Isolationskörper 71 ist in einem Gehäuse 70 angeordnet und weist drei parallele Reihen von durchgehenden Öffnungen 71a auf. Indem elektrische Kontaktelemente 72a derart in die durchgehenden Öffnungen 71a eingeführt werden, dass ihr Abschnitt 221 mit rechteckigem Querschnitt den rechteckigen Bereich der durchgehenden Öffnungen 71a ausfüllt und die Öffnungsstörkonturen dabei nicht ausgefüllt werden, wird der elektrische Steckverbinder erhalten, der in Fig. 18 dargestellt ist.

Die elektrischen Steckverbinder 4, 6 gemäß den drei Ausführungsbeispielen der Erfindung können mittels der erfindungsgemäßen Werkzeuge unter Anwendung bekannter Verfahren der Steckverbinderherstellung produziert werden und weisen gegenüber herkömmlichen Steckverbindern 2a, 2b eine erhöhte mechanische Belastbarkeit auf.

## Patentansprüche

1. Werkzeug (3, 5) zum Spritzgießen eines Steckverbinders (4, 6), aufweisend einen Basisbereich (31, 51) und mehrere aus dem Basisbereich (31, 51) vorspringende Kerne (31a, 31b, 31c, 31d, 31e, 31f, 51a, 51b, 51c, 51d, 51e, 51f), wobei mindestens ein Kern (31a, 31b, 31c, 31d, 31e, 31f, 51a, 51b, 51c, 51d, 51e, 51f) einen rechteckigen Querschnitt mit mehreren Kernstörkonturen (311a, 312a, 311b, 312b, 311c, 312c, 311d, 312d, 311e, 312e, 311f, 312f, 512a, 511b, 512b, 511c, 512d, 511e, 512e, 511f) aufweist, **dadurch gekennzeichnet, dass** diese punktsymmetrisch aber nicht spiegelsymmetrisch an dem Kern (31a, 31b, 31c, 31d, 31e, 31f, 51b, 51e) angeordnet sind.

2. Werkzeug (3, 5) nach Anspruch 1, **dadurch gekennzeichnet, dass** jede Kernstörkontur (312a, 311b, 312b, 311c, 312d, 311e, 312e, 311f, 512a, 511b, 512b, 511c, 512d, 511e, 512e, 511f) sich an einer Seite eines Kerns (31a, 31b, 31c, 31d, 31e, 31f, 51a, 51b, 51c, 51d, 51e, 51f) befindet, die einem anderen Kern (31a, 31b, 31c, 31d, 31e, 31f, 51a, 51b, 51c, 51d, 51e, 51f) zugewandt ist.

3. Werkzeug (3, 5) nach Anspruch 1 oder 2, **dadurch gekennzeichnet, dass** es an einem ersten Kern (31b, 31c, 31e, 31f, 51b, 51c, 51e, 51f) mindestens eine erste Kernstörkontur (311b, 311c, 311e, 311f, 511b, 511c, 511e, 511f) aufweist, die einem zweiten Kern (31a, 31b, 31d, 31e, 51a, 51b, 51d, 51e) zugewandt ist und an dem zweiten Kern (31a, 31b, 31d, 31e, 51a, 51b, 51d, 51e) mindestens eine zweite Kernstörkontur (312a, 312b, 312d, 312e, 512a, 512b, 512d, 512e) aufweist, die dem ersten Kern (31b, 31c, 31e, 31f, 51b, 51c, 51e, 51f) zugewandt ist.

4. Werkzeug (3, 5) nach Anspruch 3, **dadurch gekennzeichnet, dass** jede Seite der ersten Kernstörkontur (311b, 311c, 311e, 311f, 511b, 511c, 511e, 511f), parallel zu einer Seite der zweiten Kernstörkontur (312a, 312b, 312d, 312e, 512a, 512b, 512d, 512e) verläuft.

5. Spritzgießverfahren zur Herstellung eines Steckverbinders (4, 6), umfassend die folgenden Schritte:
- Bereitstellen eines, Werkzeugs (3, 5) nach einem der Ansprüche 1 bis 4,
- Einbringen einer geschmolzenen Polymermasse in das Werkzeug (3, 5), wobei die Fließrichtung der Polymermasse mittels der mindestens einen Kernstörkontur (311a, 312a, 311b, 312b, 311c, 312c, 311d, 312d, 311e, 312e, 311f, 312f, 512a, 511b, 512b, 511c, 512d, 511e, 512e, 511f) so gelenkt wird, dass keine Polymerströme entlang einer Linie (L) aufeinandertreffen, welche die Mittelpunkte zweier Kerne (31a, 31b, 31c, 31d, 31e, 31f, 51a, 51b, 51c, 51d, 51e, 51f) miteinander verbindet,
- Verfestigenlassen der geschmolzenen Polymermasse,
- Entfernen des Werkzeugs (3, 5), um einen elektrischen Isolationskörper (41, 61) zu erhalten, der aus der Polymermasse besteht und der durchgehende Öffnungen (41a, 41b, 41c, 41d, 41e, 41f, 61a, 61b, 61c, 61d, 61e, 61f) aufweist, und
- Einbringen jeweils eines elektrischen Kontaktelements (42a, 42b, 42c, 42d, 42e, 42f, 62a, 62b, 62c, 62d, 62e, 62f) in jede der durchgehenden Öffnungen (41a, 41b, 41c, 41d, 41e, 41f, 61a, 61b, 61c, 61d, 61e, 61f).

6. Spritzgießverfahren nach Anspruch 5, **dadurch gekennzeichnet, dass** die Polymermasse aus einer Richtung in das Werkzeug (3, 5) eingebracht wird, in welche mindestens eine Kernstörkontur (311a, 312a, 311b, 312b, 311c, 312c, 311d, 312d, 311e, 312e, 311f, 312f, 512a, 511b, 512b, 511c, 512d, 511e, 512e, 511f) des Werkzeugs (3, 5) weist.

## Claims

1. Tool (3, 5) for the injection moulding of a plug connector (4, 6), having a base region (31, 51) and a plurality of cores (31a, 31b, 31c, 31d, 31e, 31f, 51a, 51b, 51c, 51d, 51e, 51f) protruding from the base region (31, 51), wherein at least one core (31a, 31b, 31c, 31d, 31e, 31f, 51a, 51b, 51c, 51d, 51e, 51f) has a rectangular cross-section with a plurality of core interfering contours (311a, 312a, 311b, 312b, 311c, 312c, 311d, 312d, 311e, 312e, 311f, 312f, 512a, 511b, 512b, 511c, 512d, 511e, 512e, 511f), **characterised in that** these are arranged point-symmetrically, but not mirror-symmetrically, on the core (31a, 31b, 31c, 31d, 31e, 31f, 51b, 51e).

2. Tool (3, 5) according to claim 1, **characterised in that** each core interfering contour (312a, 311b, 312b, 311c, 312d, 311e, 312e, 311f, 512a, 511b, 512b, 511c, 512d, 511e, 512e, 511f) is located on a side of a core (31a, 31b, 31c, 31d, 31e, 31f, 51a, 51b, 51c, 51d, 51e, 51f) which is facing towards another core (31a, 31b, 31c, 31d, 31e, 31f, 51a, 51b, 51c, 51d, 51e, 51f).

3. Tool (3, 5) according to claim 1 or 2, **characterised in that** it has at least one first core interfering contour (311b, 311c, 311e, 311f, 511b, 511c, 511e, 511f) on a first core (31b, 31c, 31e, 31f, 51b, 51c, 51e, 51f), said first core interfering contour facing towards a second core (31a, 31b, 31d, 31e, 51a, 51b, 51d, 51e), and has at least one second core interfering contour (312a, 312b, 312d, 312e, 512a, 512b, 512d, 512e) on the second core (31a, 31b, 31d, 31e, 51a, 51b, 51d, 51e), said second core interfering contour facing towards the first core (31b, 31c, 31e, 31f, 51b, 51c, 51e, 51f).

4. Tool (3, 5) according to claim 3, **characterised in that** each side of the first core interfering contour (311b, 311c, 311e, 311f, 511b, 511c, 511e, 511f) runs in parallel to a side of the second core interfering contour (312a, 312b, 312d, 312e, 512a, 512b, 512d, 512e).

5. Injection moulding method for the production of a plug connector (4, 6), comprising the following steps:
- providing a tool (3, 5) according to one of claims 1 to 4,
- introducing a molten polymer mass into the tool (3, 5), wherein the flow direction of the polymer mass is directed by means of the at least one core interfering contour (311a, 312a, 311b, 312b, 311c, 312c, 311d, 312d, 311e, 312e, 311f, 312f, 512a, 511b, 512b, 511c, 512d, 511e, 512e, 511f) such that no polymer flows converge along a line (L) which connects the centre points of two cores (31a, 31b, 31c, 31d, 31e, 31 f, 51a, 51b, 51c, 51d, 51e, 51f) to each other,
- allowing the molten polymer mass to solidify,
- removing the tool (3, 5) in order to obtain an electrical insulating body (41, 61) which consists of the polymer mass and has through-openings (41a, 41b, 41c, 41d, 41e, 41f, 61a, 61b, 61c, 61d, 61e, 61f), and
- introducing, respectively, an electrical contact element (42a, 42b, 42c, 42d, 42e, 42f, 62a, 62b, 62c, 62d, 62e, 62f) into each of the through-openings (41a, 41b, 41c, 41d, 41e, 41f, 61a, 61b, 61c, 61d, 61e, 61f).

6. Method according to claim 5, **characterised in that** the polymer mass is introduced into the tool (3, 5) from a direction in which at least one core interfering contour (311a, 312a, 311b, 312b, 311c, 312c, 311d, 312d, 311e, 312e, 311f, 312f, 512a, 511b, 512b, 511c, 512d, 511e, 512e, 511f) of the tool (3, 5) points.

## Revendications

1. Outil (3, 5) de moulage par injection d'un connecteur enfichable (4, 6), présentant une partie de base (31, 51) et plusieurs noyaux (31a, 31b, 31c, 31d, 31e, 31f, 51a, 51b, 51c, 51d, 51e, 51f) faisant saillie à partir de la partie de base (31, 51) ; au moins un noyau (31a, 31b, 31c, 31d, 31e, 31f, 51a, 51b, 51c, 51d, 51e, 51f) possédant une section transversale rectangulaire présentant plusieurs contours déportés de noyau (311a, 312a, 311b, 312b, 311c, 312c, 311d, 312d, 311e, 312e, 311f, 312f, 512a, 511b, 512b, 511c, 512d, 511e, 512e, 511f), **caractérisé en ce que** ceux-ci sont disposés en symétrie ponctuelle mais pas en symétrie spéculaire sur le noyau (31a, 31b, 31c, 31d, 31e, 31f, 51b, 51e).

2. Outil (3, 5) selon la revendication 1, **caractérisé en ce que** chaque contour déporté de noyau (312a, 311b, 312b, 311c, 312d, 311e, 312e, 311f, 512a, 511b, 512b, 511c, 512d, 511e, 512e, 511f) se trouve sur un côté d'un noyau (31a, 31b, 31c, 31d, 31e, 31f, 51a, 51b, 51c, 51d, 51e, 51f) qui est tourné vers un autre noyau (31a, 31b, 31c, 31d, 31e, 31f, 51a, 51b, 51c, 51d, 51e, 51f).

3. Outil (3, 5) selon la revendication 1 ou 2, **caractérisé en ce qu'**il présente, sur un premier noyau (31b, 31c, 31e, 31f, 51b, 51c, 51e, 51f), au moins un premier contour déporté de noyau (311b, 311c, 311e, 311f, 511b, 511c, 511e, 511f) qui est tourné vers un deuxième noyau (31a, 31b, 31d, 31e, 51a, 51b, 51d, 51e) et, sur le deuxième noyau (31a, 31b, 31d, 31e, 51a, 51b, 51d, 51e), au moins un deuxième contour déporté de noyau (312a, 312b, 312d, 312e, 512a, 512b, 512d, 512e) qui est tourné vers le premier noyau (31b, 31c, 31e, 31f, 51b, 51c, 51e, 51 f).

4. Outil (3, 5) selon la revendication 3, **caractérisé en ce que** chaque côté du premier contour déporté de noyau (311b, 311c, 311e, 311f, 511b, 511c, 511e, 511f) est parallèle à un côté du deuxième contour déporté de noyau (312a, 312b, 312d, 312e, 512a, 512b, 512d, 512e).

5. Procédé de moulage par injection permettant de produire un connecteur enfichable (4, 6), comprenant les étapes suivantes :
- mise à disposition d'un outil (3, 5) selon l'une des revendications 1 à 4,
- introduction d'une matière polymère en fusion dans l'outil (3, 5), la direction d'écoulement de la matière polymère étant guidée au moyen de l'au moins un contour déporté de noyau (311a, 312a, 311b, 312b, 311c, 312c, 311d, 312d, 311e, 312e, 311f, 312f, 512a, 511b, 512b, 511c, 512d, 511e, 512e, 511f) de sorte que les flux de polymère ne viennent pas en contact mutuel le long d'une ligne (L) reliant les centres de deux noyaux (31a, 31b, 31c, 31d, 31e, 31f, 51a, 51b, 51c, 51d, 51e, 51f),
- durcissement de la matière polymère en fusion,
- retrait de l'outil (3, 5), produisant ainsi un corps d'isolation électrique (41, 61) composé de la matière polymère et présentant des ouvertures traversantes (41a, 41b, 41c, 41d, 41e, 41f, 61a, 61b, 61c, 61d, 61e, 61f), et
- introduction d'un élément de contact électrique (42a, 42b, 42c, 42d, 42e, 42f, 62a, 62b, 62c, 62d, 62e, 62f) respectif dans chacune des ouvertures traversantes (41a, 41b, 41c, 41d, 41e, 41f, 61a, 61b, 61c, 61d, 61e, 61f).

6. Procédé de moulage par injection selon la revendication 5, **caractérisé en ce que** la matière polymère est introduite dans l'outil (3, 5) selon une direction vers laquelle est dirigé au moins un contour déporté de noyau (311a, 312a, 311b, 312b, 311c, 312c, 311d, 312d, 311e, 312e, 311f, 312f, 512a, 511b, 512b, 511c, 512d, 511e, 512e, 511f) de l'outil (3, 5).
